# EUROPEAN PATENT APPLICATION

(11) **EP 1 041 745 A2**
(43) Date of publication of application: **04.10.2000**
(21) Application number: 00302502.0
(22) Date of filing: 27.03.2000
(51) Int. Cl.: H04B 7/26

(54) **TDMA/TDD system data transmission equipment**

(30) Priority: 30.03.1999 JP 8995999
(71) Applicant: ALPS ELECTRIC CO., LTD., Ota-ku Tokyo 145 (JP)
(72) Inventor: Izumi, Hideo, Otsuka-cho, Ota-ku, Tokyo (JP)
(74) Representative: Kensett, John Hinton

(57) **Abstract**

The invention provides TDMA/TDD system data transmission equipment that allows, in data communication between one piece of data transmission equipment and plural (N) pieces of data transmission equipment, multiplex data transmission in one to N with a high data transmission rate, which can be manufactured at a low cost. The data transmission equipment of the invention includes a data processing unit (1) that forms transmission data and processes reception data, a USB interface (2) that exchanges data with the data processing unit, a data array conversion unit (3) that executes the sequencing of plural inputted transmission data pieces each by the partner data transmission equipment, a data storage unit (4) that temporarily stores plural transmission data pieces, a transmission and reception slot control unit (5) that sets up time allocation of a transmission and reception slot, an encoding unit (6) that encodes transmission serial data and forms transmission coded data based on the TDMA/TDD system, a transmitting unit (7) that transmits the transmission coded data in the form of the RF signal, a receiving unit (8) that receives the RF signal and converts it into a base band signal, and a decoding unit (9) that decodes the base band signal into reception coded data.

## Description

The present invention relates to a TDMA (Time Division Multiple Access)/TDD (Time Division Duplex) system data transmission equipment, particularly to TDMA/TDD system data transmission equipment that allows multiplex data transmission between one piece of data transmission equipment and plural pieces of data transmission equipment.

As a multiplex communication system between multiple users, using the TDMA system, the PHS (Personal Handyphone System) is generally used in Japan. Other than this PHS, the DECT (Digital Enhanced Cordless Telecommunication) system is widely used in Europe, Africa, the Middle and Near East, South America, Oceania, China, India, and other countries.

This DECT system is established by the ETSI (European Telecommunication Standard Institute) in Europe, being a standard Radio Communication System common to the European countries, which allows transmission of data in addition to the voice signals. The frequency band 1.88 through 1.90 GHz is assigned to Europe, 1.91 through 1.93 GHz to South America, and 1.90 through 1.92 GHz to China, in which 10 channel are allocated and 12 slots each are allocated to the transmission and reception for one channel to perform time division multiplex transmission.

In this case, both a master device and a slave device of the data transmission equipment adopting the DECT system are made up with a data processing unit (host equipment) being a data terminal equipment (DTE), a data module including a transmitting unit, a receiving unit, an encoding unit, a decoding unit, and a transmission and reception slot control unit, etc., and an interface to couple the data processing unit with the data module. The interface here employs the so-called RS-232C/UART (Universal Asynchronous Receiver Transmitter) (IEEE conformable). And, when the data transmission (conversation) is made between the master device and the slave device which are the data transmission equipment, in each piece of the data transmission equipment, transmission serial data (conversation information) obtained by the data processing unit is converted into transmission coded data specified by the DECT system, and the transmission coded data is transmitted to partner data transmission equipment in the form of an RF signal at a specific transmission slot time. On the other hand, when an RF signal from the partner data transmission equipment is received at a specific reception slot time, the RF signal is decoded to reproduce reception serial data, and the reproduced reception serial data is processed by the data processing unit.

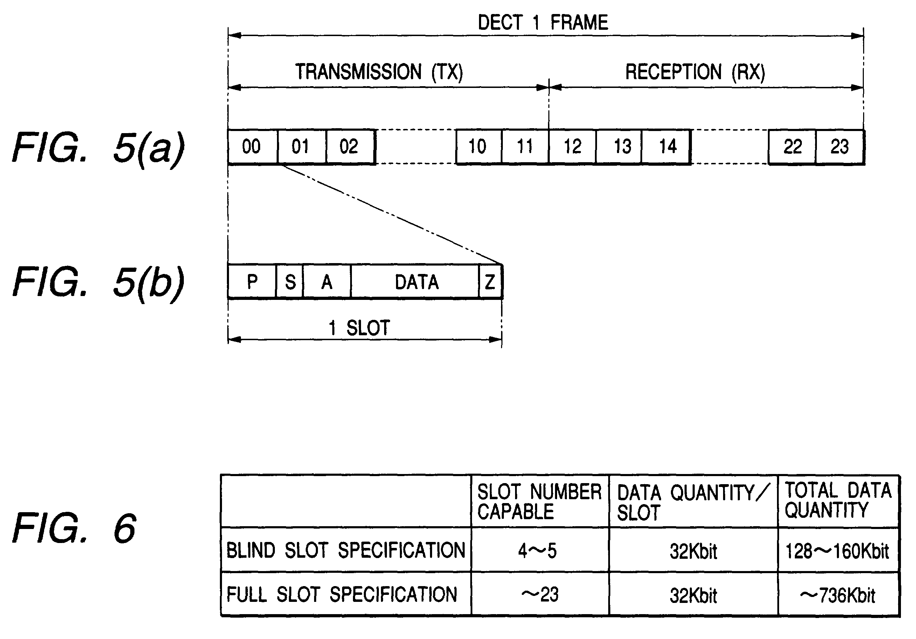

Fig. 5(a) and Fig. 5(b) are illustrations to explain the coded data format transmitted and received in the DECT system, which shows the data format of one frame in one channel.

As shown in Fig. 5(a), the one frame of the coded data according to the DECT system includes slot 00 through slot 11 assigned to the transmission (TX), and slot 12 through slot 23 assigned to the reception (RX). The time assigned to the transmission (TX) and the reception (RX) each is 5 ms.

And, as shown in Fig. 5(b), the data configuration of each slot includes a synchronous preamble P to set up an idle time for synchronization, a synchronous word S to indicate the DECT system coded data, an ID code A made up of an identification code for identifying a communication partner and the other control codes, DATA composed of communication data, and an error bit Z for the parity check.

The data transmission equipment adopting the DECT system employs the UART interface, which is most widespread at present as the interface between the data processing unit (data terminal equipment) and the data module. The data transmission rate of the communication with a modem, which is spread in general, is 57.6 KBPS, and the data transmission rate of the cross cable between a data processing unit and another data processing unit is 115. 2 KBPS. However, the base band transmission IC (integrated circuit) used in the DECT system data transmission equipment for the general home use cannot very often handle the data transmission rate of 57.6 KBPS.

Fig. 6 is a characteristic illustration of a capable data transmission quantity, in view of the standard specification of the DECT system.

As shown in Fig. 6, in the full slot specification using the 23 slots of the standard specification of the DECT system, the total data quantity of 736 K bits max can be transmitted, but in the blind slot specification using the 4 or 5 slots when the UART interface is used, only the total data quantity of 128 to 160 K bits can be transmitted, which results in failure to utilize the full inherent capability of data transmission quantity in the DECT system.

In contrast to this, the base band transmission IC is added with an IOM or PCM interface widely used in the private automatic branch exchange (PABX). If this IOM interface is used, it will materialize the data transmission rate of 2048 KBPS; however the data transmission equipment of this type does not support the IOM interface, and it cannot be used.

In the data transmission according to the DECT system, normally the data transmission is carried out between one piece of data transmission equipment and a plural (N) pieces of data transmission equipment, that is, the multiplex data transmission is executed in the relation of one to N. However, the UART interface is suited to the data transmission in one to one, and when the multiplex data transmission is executed in one to N as the DECT system, N pieces of the UART interfaces are required to be connected in parallel. Accordingly, the production cost increase of the data transmission equipment cannot be avoided for the increase in the number of the UART interfaces used.

The present invention has been made in view of such technical circumstances, and it is an object of the invention to provide TDMA/TDD system data transmission equipment that allows, in data communication between one data transmission equipment and plural (N) pieces of data transmission equipment, multiplex data transmission in one to N with a high data transmission rate, which can be manufactured at a low cost.

In order to accomplish the object, the TDMA/TDD data transmission equipment according to the present invention contains a means that is made up with a data processing unit, an interface, a data array conversion unit, a data storage unit, a transmission and reception slot control unit, an encoding unit, a transmitting unit, a receiving unit, and a decoding unit.

According to the foregoing means, the USB (Universal Serial Bus) interface being a type of high-speed interface is employed as the interface between the data processing unit and the data module, and the data exchange is executed between the data processing unit and the USB interface. Therefore, in a data exchange between one piece of data transmission equipment and plural (N) pieces of data transmission equipment, multiplex data transmission in one to N can be carried out with a high data transmission rate. In this case, since the USB interface is not so expensive in itself, the cost increase by the use of the USB interface is insignificant, which restricts the production cost increase in comparison to one using plural UART interfaces.

In accordance with one aspect of the present invention, the TDMA/TDD system data transmission equipment contains: a data processing unit that forms transmission data and processes reception data; an interface connected to the data processing unit, that exchanges the data with the data processing unit; a data array conversion unit that outputs to sequence plural transmission data pieces supplied from the interface each by partner data transmission equipment; a data storage unit that temporarily stores plural transmission data pieces outputted from the data array conversion unit; a transmission and reception slot control unit that sets up time allocation of a transmission and reception slot; an encoding unit that encodes a transmission serial data with the slot controlled and forms transmission coded data according to the TDMA/TDD system; a transmitting unit that transmits the transmission coded data to partner data transmission equipment in the form of an RF signal; a receiving unit that receives the RF signal transmitted by the partner data transmission equipment and converts it into a base band signal; and a decoding unit that decodes the base band signal into reception coded data.

Preferably, the TDMA/TDD system data transmission equipment employs an interface that conforms to the USB interface.

Preferably, the packet format of a serial data set in the data array conversion unit possesses a data length that can be set freely in relation to header information.

Preferably, the data array conversion unit, data storage unit, transmission and reception slot control unit, encoding unit, and decoding unit are integrated into one chip IC.

According to these embodiments of the present invention, the data transmission equipment employs, as the interface between the data processing unit and the data module, the USB interface being a type of the interface that can perform high-speed data processing, in which the USB interface is connected to the data processing unit, and the data exchange is carried out at a high speed between the data processing unit and the USB interface. Therefore, in the data exchange between one piece of data transmission equipment and plural (N) pieces of data transmission equipment, multiplex data transmission in one to N can be carried out with a high data transmission rate. And, since the USB interface is not so expensive in itself, the cost increase by the use of the USB interface is insignificant, which materializes data transmission equipment at a low production cost in comparison to what employs plural UART interfaces in parallel connection for the multiplex data transmission in one to N.
Fig. 1 is a block diagram illustrating one embodiment of the TDMA/TDD system data transmission equipment relating to the present invention;
Fig. 2 is a flowchart explaining the major operations executed by the data transmission equipment shown in Fig. 1;
Fig. 3 is an illustration of an example of a data recognition packet formatted by the USB, used in the data transmission equipment shown in Fig. 1;
Fig. 4 is an illustration of an example of stored contents of the transmission and reception data buffer memories in the master device (data transmission equipment) in the embodiment;
Fig. 5 is an illustration of a format of coded data transmitted/received in the DECT system; and
Fig. 6 is a characteristic illustration of a capable data transmission quantity, in view of the standard specification of the DECT system.

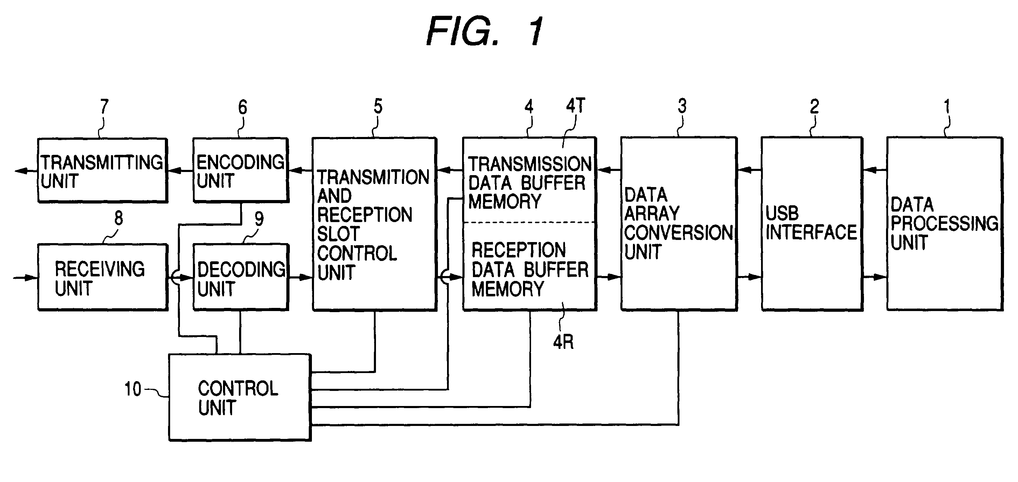

As shown in Fig. 1, the data transmission equipment of this embodiment contains a data processing unit 1 being data terminal equipment (DTE) that forms transmission serial data and processes reception serial data, a USB interface 2 connected to the data processing unit 1, that exchanges data with the data processing unit 1, a data array conversion unit 3 that outputs to make the sequencing of plural inputted transmission data individually by partner data transmission equipment, a data storage unit 4 including a transmission data buffer memory 4T and a reception data buffer memory 4R, that temporarily stores plural serial data pieces inputted, a transmission and reception slot control unit 5 that sets up time allocation of a transmission and reception slot, an encoding unit 6 that encodes transmission serial data and forms transmission coded data based on the TDMA/TDD system, a transmitting unit 7 that transmits the transmission coded data to partner data transmission equipment in the form of an RF signal, a receiving unit 8 that receives the RF signal transmitted by the partner data transmission equipment and converts it into a base band signal, a decoding unit 9 that decodes the base band signal into reception coded data, and a control unit 10 that totally controls the data module. In this case, the data module includes all the units except for the data processing unit 1 and the USB interface 2.

The data input terminal and the data output terminal of the data processing unit 1 are connected to the first data output terminal and the first data input terminal of the USB interface 2, respectively. The second output terminal and the second input terminal of the USB interface 2 are connected to the transmission data input terminal and the reception data output terminal of the array conversion unit 3, respectively. The transmission data output terminal of the array conversion unit 3 is connected to the data input terminal of the transmission data buffer memory 4T, and the reception data input terminal of the array conversion unit 3 is connected to the data output terminal of the reception data buffer memory 4R. The data output terminal of the transmission data buffer memory 4T is connected to the transmission serial data input terminal of the transmission and reception slot control unit 5, and the data input terminal of the reception data buffer memory 4R is connected to the transmission serial data output terminal thereof. The transmission serial data output terminal of the transmission and reception slot control unit 5 is connected to the transmission serial data input terminal of the encoding unit 6, and the reception serial data input terminal thereof is connected to the reception coded data output terminal of the decoding unit 9. The transmission coded data input terminal of the transmitting unit 7 is connected to the transmission coded data output terminal of the encoding unit 6, and the RF signal output terminal is connected to a transmission and reception antenna not illustrated. The RF signal input terminal of the receiving unit 8 is connected to the transmission and reception antenna, and The base band signal output terminal thereof is connected to the base band signal input terminal of the decoding unit 9. The control unit 10 is mainly connected to each of the control terminals of the array conversion unit 3, transmission data buffer memory 4T, reception data buffer memory 4R, transmission and reception slot control unit 5, encoding unit 6, and decoding unit 9.

In the following description, the data transmission equipment shown in Fig. 1 is assumed to be a master device, and The data transmission equipment of plural (N) partners are assumed to be a slave device 1 through a slave device N.

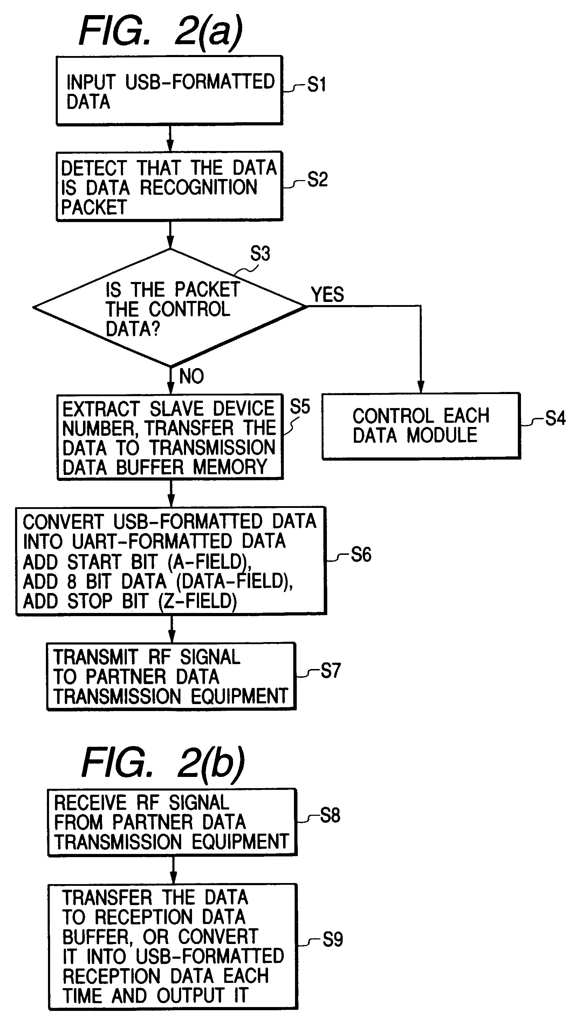

Fig. 2 illustrates a flowchart explaining the major operations executed by the master device, in which Fig. 2(a) shows the operation flow during transmission, and Fig. 2(b) shows the operation flow during reception.

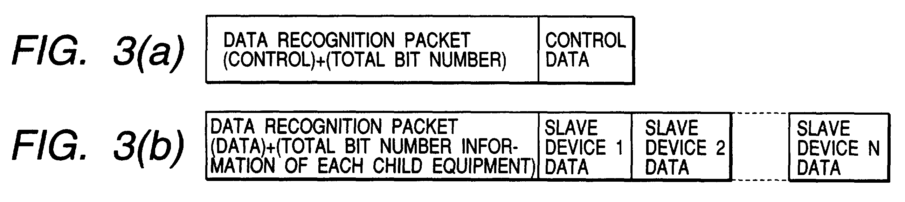

Fig. 3 illustrates an example of a USB-formatted data recognition packet used in the master device, in which Fig. 3(a) shows a case where the data recognition packet is control data, and Fig. 3(b) shows a case where the data recognition packet is slave device data 1 through slave device data N.

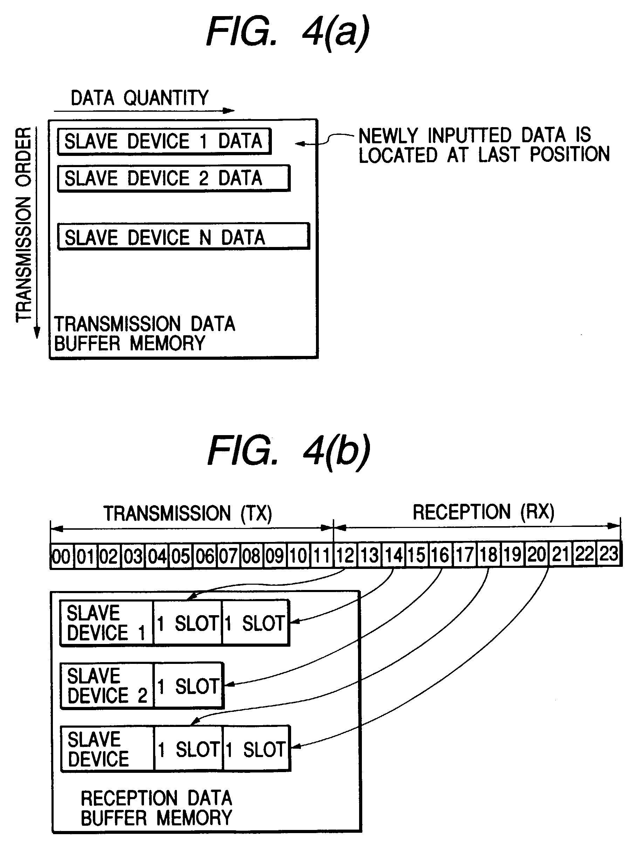

Fig. 4 illustrates an example of stored contents of the transmission and reception data buffer memories 4T, 4R in the master device, in which Fig. 4(a) shows the stored contents of the transmission data buffer memory 4T, and Fig. 4 (b) shows the stored contents of the reception data buffer memory 4R.

Now, the operation of the master device of this embodiment will be described referring to Fig. 2 through Fig. 4.

The data processing unit 1 and the USB interface 2 are connected through a terminal P1.x of the data processing unit 1 and a terminal INT_N of the USB interface 2, and the other terminals thereof are connected through a data bus. Namely, the data processing unit 1 and the USB interface 2 exchange data through the data bus between them, and every time data is exchanged, a controller (CPU) of the data processing unit 1 receives an interrupt instruction, With such operations between the data processing unit 1 and the USB interface 2, the data processing unit 1 outputs the USB-formatted data recognition packet through the USB interface 2. In this case, the data recognition packet is the one composed of the control data as shown in Fig. 3(a), or the one composed of the slave device data 1 through the slave device data N as in Fig. 3(b).

Here, the control unit 10 detects that the data supplied to the array conversion unit 3 from the USB interface 2 is USB-formatted data (step S1 in Fig. 2).

Next, the control unit 10 detects that the USB-formatted data supplied to the array conversion unit 3 from the USB interface 2 is a data recognition packet (step S2 in Fig. 2).

Next, the control unit 10 judges whether or not the data recognition packet detected at the array conversion unit 3 is the control data (step S3 in Fig. 2). If it is judged to be the control data (Y), the process advances to step S4, and on the other hand, if it is judged to be not the control data but the slave device data (N), the process advances to step S5.

Next, the control unit 10 controls the units configuring the data module with the control data thus obtained (step S4 in Fig. 2).

Further, in accordance with the instruction from the control unit 10, the array conversion unit 3 arranges the sequence of the obtained slave device data on the basis of the slave device number, and supplies the slave device data thus sequenced as well as the slave device number to the transmission data buffer memory 4T to store them (step S5 in Fig. 2). Here, the data length of the slave device data is not a fixed one but an arbitrary one according to the data quantity. Also, the data stored in the transmission data buffer memory 4T is sequenced in the inputted order as shown in Fig. 4(a).

Next, the control unit 10 reads the transmission data stored in the transmission data buffer memory 4T in the order stored, and supplies it to the transmission and reception slot control unit 5. In accordance with the instruction from the control unit 10, the transmission and reception slot control unit 5 allocates the supplied transmission data to one slot of the 12 slots from slot 00 through slot 11 for the transmission, for example to slot 00, as shown in Fig. 5(a), and supplies the data having the slot allocated to the encoding unit 6 so that the data can be transmitted within the slot time of this slot 00.

Next, in accordance with the instruction from the control unit 10, the encoding unit 6 converts the supplied USB-formatted transmission data into UART-formatted transmission data, and encodes the converted UART-formatted transmission data, thus forming TDMA/TDD system transmission coded data (step S6 in Fig. 2). The DECT format transmission data of the slot 00 obtained here is configured, as shown in Fig. 5(b), with a start bit added to the A-field, a stop bit added to the Z-field, and 8-bit data added to the DATA-filed.

Next, in accordance with the instruction from the control unit 10, the transmitting unit 7 converts the transmission coded data outputted from the encoding unit 6 into an RF radio frequency signal, amplifies the RF signal, and transmits it toward the partner slave device through the transmission and reception antenna not illustrated (step S7 in Fig. 2).

Further, as shown in Fig. 5(a), when the RF signal transmitted from the partner slave device is received by the transmission and reception antenna in the slot time of one slot of the 12 slots from slot 12 through slot 23 for the reception, for example, in the slot time of slot 12, the receiving unit 8 applies the frequency conversion, on the basis of the instruction from the control unit 10, to the RF signal received by the transmission and reception antenna, and converts the RF signal having the frequency converted into a base band signal, and supplies the converted base band signal to the decoding unit 9 (step S8 in Fig. 2).

Next, in accordance with the instruction from the control unit 10, the decoding unit 9 decodes the supplied base band signal to reproduce a reception coded data, and supplies the coded data to the transmission and reception slot control unit 5 as the reception coded data for one slot, as shown in Fig. 5(b).

Next, in accordance with the instruction from the control unit 10, the transmission and reception slot control unit 5 supplies the reception coded data to the reception buffer 4R, where the data is stored. Here, in the reception data buffer memory 4R, as shown in Fig. 4(b), the data from the slave device allocated to each of the reception slots is stored sequentially in a linked state by the unit of each slave device, and is converted into the data of an arbitrary length by each slave device. In the example shown in Fig. 4(b), the data for two slots from the slave device 1 allocated to two slots 12, 14 of the 12 slots from slot 12 through slot 23 for the reception is stored in sequence in the storage area for the slave device 1 in the reception data buffer memory 4R, the data for one slot from the slave device 2 allocated to slot 16 of the 12 slots is stored in the storage area for the slave device 2 in the reception data buffer memory 4R, and the data for two slots from the slave device 3 allocated to slots 18, 20 of the 12 slots is stored in sequence in the storage area for the slave device 3 in the reception data buffer memory 4R. And, when this data is read from the reception data buffer memory 4R, The data is read simultaneously by the unit of the slave device. The formation of data in this manner will convert the UART-formatted reception data into the USB-formatted reception data (step S9 in Fig. 2).

And, the USB-formatted reception data is supplied to the data processing unit 1 through the array conversion unit 3 and The USB-interface 2, and the data processing unit 1 applies predetermined processing to the data.

Thus, according to the data transmission equipment of the embodiment, the USB interface 2 being a type of high-speed interface is employed as the interface between the data processing unit 1 and the data module, and the data exchange is executed between the data processing unit 1 and the USB interface 2. Therefore, the data processing speed in the data processing unit 1 is enhanced, and in the data exchange between one piece of data transmission equipment and plural (N) pieces of data transmission equipment, multiplex data transmission in one to N can be carried out at a high data transmission rate. In this case, since the USB interface 2 is not so expensive in itself, the cost increase by the use of the USB interface 2 is insignificant, which restricts the production cost increase in comparison to equipment using plural UART interfaces.

Further, in the embodiment, the integration of the data array conversion unit 3, data storage unit 4, transmission and reception slot control unit 5, encoding unit 6, and transmitting unit 7 into one chip IC (Integrated Circuit) will achieve small-sized data transmission equipment with a simple construction.

Although the USB interface is preferred in the embodiment, the other interface whose characteristic is similar to the USB interface may be employed to display a similar function to that of the above.

Although the USB interface is solely employed in the embodiment, the UART interface may be used together with the USB interface.

As described above,
the data transmission equipment employs, as the interface between the data processing unit and the data module, the USB interface being a type of the interface capable of performing high-speed data processing, in which the USB interface is connected to the data processing unit, and the data exchange is carried out at a high speed between the data processing unit and the USB interface. Therefore, in the data exchange between one data transmission equipment and plural (N) pieces of data transmission equipment, a multiplex data transmission in one to N can be carried out at a high data transmission rate.

And, since the USB interface adopted in the present invention is not so expensive in itself, the cost increase by the use of the USB interface is insignificant, which effects data transmission equipment at a low production cost in comparison to what employs plural UART interfaces in parallel connection for the multiplex data transmission in one to N.

## Claims

1. TDMA/TDD system data transmission equipment comprising: a data processing unit that forms transmission data and processes reception data; an interface connected to the data processing unit, that exchanges the data with the data processing unit; a data array conversion unit that outputs to sequence plural transmission data pieces supplied from the interface each by partner data transmission equipment; a data storage unit that temporarily stores plural transmission data pieces outputted from the data array conversion unit; a transmission and reception slot control unit that sets up time allocation of a transmission and reception slot; an encoding unit that encodes transmission serial data with the slot controlled and forms transmission coded data according to the TDMA/TDD system; a transmitting unit that transmits the transmission coded data to partner data transmission equipment in the form of an RF signal; a receiving unit that receives the RF signal transmitted by the partner data transmission equipment and converts it into a base band signal; and a decoding unit that decodes the base band signal into reception coded data.

2. TDMA/TDD system data transmission equipment according to Claim 1, wherein the interface is a USB interface.

3. TDMA/TDD system data transmission equipment according to Claim 1 or 2, wherein the packet format of a serial data set in the data array conversion unit possesses a data length that can be set freely in relation to header information.

4. TDMA/TDD system data transmission equipment according to any preceding claim, wherein the data array conversion unit, the data storage unit, the transmission and reception slot control unit, the encoding unit, and the decoding unit are integrated into one chip IC.
